# EUROPÄISCHE PATENTSCHRIFT

(11) **EP 1 658 591 B1**
(45) Veröffentlichungstag und Bekanntmachung des Hinweises auf die Patenterteilung: **25.02.2015**
(21) Anmeldenummer: 04763046.2
(22) Anmeldetag: 29.06.2004
(51) Int. Cl.: G06T 19/00

(54) **VERFAHREN UND VORRICHTUNG ZUR DARSTELLUNG EINES VORBESTIMMBAREN BEREICHS IN MEHRDIMENSIONALEN DATENSÄTZEN**
METHOD AND DEVICE FOR THE REPRESENTATION OF A PREDETERMINABLE REGION IN MULTIDIMENSIONAL DATA SETS
PROCEDE ET DISPOSITIF POUR REPRESENTER UNE ZONE PREDETERMINABLE DANS DES ENSEMBLES DE DONNEES MULTIDIMENSIONNELLES

(30) Priorität: 29.08.2003 DE 10339979
(43) Veröffentlichungstag der Anmeldung: 24.05.2006
(73) Patentinhaber: TomTec Imaging Systems GmbH, 85716 Unterschleissheim (DE)
(72) Erfinder: WALDINGER, Johannes, 85521 Ottobrunn (DE); MUMM, Bernhard, 82291 Mammendorf (DE); BAUMANN, Rolf, 80538 München (DE); HOESCHEN, Martin, 84104 Rudelzhausen (DE)
(74) Vertreter: Müller Schupfner & Partner Patent- und Rechtsanwaltspartnerschaft mbB
(86) Internationale Anmeldenummer: PCT/EP2004/007044
(87) Internationale Veröffentlichungsnummer: WO 2005/031655

(56) Entgegenhaltungen:
- WO-A-02/29764
- US-A- 5 734 384
- US-A- 6 166 740

## Beschreibung

Die Erfindung betrifft ein Verfahren zur Darstellung eines vorbestimmbaren Bereichs in mehrdimensionalen Datensätzen nach dem Oberbegriff des Patentanspruchs 1 und eine entsprechende Vorrichtung zur Durchführung eines solchen Verfahrens nach dem Oberbegriff des Patentanspruchs 7.

Derartige Verfahren und Vorrichtungen sind beispielsweise aus der WO 98/20360 oder der PCT/EP03/01192 bekannt. Dabei werden mehrdimensionale Datensätze generiert, um mehrdimensionale Objekte, wie beispielsweise das Herz oder die Leber eines Menschen, die Oberfläche eines Halbleiters oder die Schweißnaht einer Verpackung abzubilden. Die Generierung derartiger mehrdimensionaler Datensätze erfolgt durch die Aufnahme des Objekts durch ein geeignetes Aufnahmeverfahren, wie beispielsweise eine Röntgenaufnahme, eine Ultraschallaufnahme oder eine Kernspintomographie. Die Generierung eines beispielsweise dreidimensionalen Bilddatensatzes erfolgt durch die Rekonstruktion und Zusammensetzung ein- oder zweidimensionaler Bilddaten, die anhand entsprechender Aufnahmen erzeugt wurden. Im Fall einer Ultraschallaufnahme werden durch ein Ultraschallaufnahmegerät zweidimensionale Ultraschallaufnahmen, sogenannte Bild-Teilbereiche, aufgenommen und derart in einen dreidimensionalen Bilddatensatz eingeordnet, daß die zweidimensionalen Bild-Teilbereiche in richtiger Orientierung und Anordnung zueinander die Bildinformationen für die einzelnen dreidimensionalen Bilddatenwürfel (sogenannte Voxel) des Volumendatensatzes liefern.

Das Patent US 5,734,384 beschreibt einen CT Scanner der einen volumetrischen Bereich untersucht und Voxel-Werte erzeugt. Ein vom Benutzer justierbares 3D Koordinatensystem definiert zueinander orthogonale Abschnitte und Volumenreprojektionen, die folglich eine Querbeziehung definieren. Durch eine Affintransformation wird eine Translation und Rotation des Achsensystems aus der Objektdarstellung in eine Bilddarstellung erreicht.

Solche durch zweidimensionale Aufnahmeverfahren generierte Bild-Teilbereiche entsprechen im Normalfall einem zeilenweisen Scanvorgang, der das Objekt zeilenweise längs einer Aufnahmerichtung, in der das Röntgengerät oder beispielsweise der Ultraschallsender verfahren wird, aufnimmt. Die im Aufnahmegerät erzeugten Bild-Teilbereiche lassen sich digital oder über einen Videoausgang in einem Nachverarbeitungsgerät bzw. in ein Datenverarbeitungssystem übernehmen. Dort können die zweidimensionalen Bilder gespeichert oder auch direkt nachverarbeitet werden, indem die einzelnen Schichten bzw. Scheiben des Objekts "übereinander geschichtet" bzw. "aneinander gereiht" werden, um dann am Anzeigegerät eine beispielsweise dreidimensionale Darstellung des Objekts zu erhalten.

Falls es sich bei dem Objekt um ein bewegtes Objekt handelt, können die entsprechenden zweidimensionalen Bild-Teilbereiche auch mit einer zugehörigen Zeitinformation versehen werden, so daß jeder Bild-Teilbereich einem bestimmten Bewegungszustand des Objekts zugeordnet werden kann. Mit Hilfe dieser Zeitinformation können dreidimensionale Bilddatensätze generiert werden, die ebenfalls über entsprechende Zeitinformationen verfügen. Man spricht dann von einem vierdimensionalen Daten-satz. Ein dreidimensionales bewegtes Objekt (beispielsweise das Herz eines Menschen) kann so am Bildschirm eines Datenverarbeitungsgeräts bewegt (d.h. vierdimensional) dargestellt werden, indem die mit den Zeitinformationen versehenen dreidimensionalen Bilddatensätze zeitlich gestaffelt dargestellt werden.

Sobald ein drei- oder vierdimensionaler Bilddatensatz vorliegt, kann dieser beispielsweise am Bildschirm eines Datenverarbeitungsgeräts dargestellt werden. In aller Regel möchte der Betrachter eines solchen Bildes jedoch bestimmte interessierende Bereiche des Objekts, beispielsweise die Herzklappe eines Herzens, die Lötstelle eines Halbleiterbauelements auf der Leiterplatte oder die Klebestelle einer Verpackung, genauer betrachten. Dabei ist es bekannt, daß der Betrachter durch die Auswahl meist zweidimensionaler Schnittebenen durch den dreidimensionalen Datensatz den vorbestimmbaren Bereich analysiert, indem er verschiedene Schnittebenen durch den vorbestimmbaren Bereich legt und sukzessive manipuliert bis er die gewünschte Schnittdarstellung erhält.

Eine solche Vorgehensweise hat jedoch den Nachteil, daß das "Navigieren" durch den mehrdimensionalen Datensatz mittels einer meist zweidimensionalen Schnittebene zeitaufwändig ist, da die Ebene durch mehrmalige Manipulation so eingestellt werden muß, daß der Schnitt durch den mehrdimensionalen Daten-, satz, beispielsweise durch das Volumen, die entsprechende gewünschte Ansicht bietet. Beispielsweise ist ein solches Vorgehen bei medizinischen Daten oft sehr langwierig und umständlich, da mehrere (Manipulations-) Schritte notwendig sind, um die entsprechende interessierende Stelle, d.h. den vorbestimmbaren Bereich "freizuschneiden" und sichtbar zu machen.

Der Erfindung liegt daher die Aufgabe zugrunde, ein Verfahren bzw. eine Vorrichtung zur Darstellung eines vorbestimmbaren Bereichs anzugeben, das die interessierende Stelle bzw. den vorbestimmbaren Bereich innerhalb eines mehrdimensionalen Datensatzes schneller und einfacher auffinden und darstellen läßt.

Die Erfindung löst diese Aufgabe durch die kennzeichenden Merkmale der unabhängigen Patentansprüche 1 und 7. Vorteil-hafte Ausgestaltungen und einige Ausführungsbeispiele der Erfindung sind in den Unteransprüchen beansprucht und dort gekennzeichnet.

Das erfindungsgemäße Verfahren zur Darstellung eines vorbestimmbaren Bereichs in mehrdimensionalen Datensätzen bedient sich dabei in herkömmlicher Weise eines mehrdimensionalen Bilddatensatzes, der aus inbesondere drei- oder vierdimensionalen Bilddaten eines zu untersuchenden Objekts besteht. Diese Bilddaten können mittels einer beliebigen Aufnahme des Objekts, beispielsweise durch eine Röntgenaufnahme, eine Ultraschallaufnahme, optische oder andere elektromagnetische Aufnahmen, erzeugt werden. Nach der Generierung dieses mehrdimensionalen Datensatzes wird ebenfalls in herkömmlicher Weise die interessierende Stelle des Objekts dargestellt, indem ein insbesondere zweidimensionaler Schnitt durch den vorbestimmbaren Bereich gelegt und angezeigt wird.

Zur Vermeidung der vorerwähnten Nachteile wird der Schnitt jedoch nicht unmittelbar durch den mehrdimensionalen Datensatz gelegt, sondern durch mindestens eine Vektorebene definiert, die ebenfalls in dem mehrdimensionalen Datensatz liegt. Die mindestens eine Vektorebene wird dabei mittels eines Vektors festgelegt, der wiederum in dem mehrdimensionalen Datensatz bzw. auf zweidimensionalen Schnittebenen durch den mehrdimensionalen Datensatz festgelegt wird.

Sobald beispielsweise eine zweidimensionale Schnittebene durch den mehrdimensionalen Datensatz in der Umgebung des vorbestimmbaren Bereichs gelegt wurde und die interessierende Stelle in dieser zweidimensionalen Schnittebene erkannt wird, kann auf diese interessierende Stelle innerhalb des vorbestimmbaren Bereichs der Vektor (im folgenden des besseren Verständnisses auch "Zeiger-" genannt) festgelegt werden, wodurch mindestens eine Vektorebene (im folgenden des besseren Verständnisses auch "Zeigerebenen" genannt), beispielsweise am Fußpunkt oder am Kopf des Vektors bzw. Zeigers, definiert wird und die Vektorebene bzw. Zeigerebene dann den graphisch darstellbaren Schnitt definiert, der die interessierende Stelle innerhalb des vorbestimmbaren Bereichs bzw. den vorbestimmbaren Bereich selbst in genau derjenigen Richtung, Lage und Orientierung zeigt, die der Benutzer wünscht. Der Zeiger dient als "Navigationswerkzeug"

Mit Vorteil ist der Zeiger ein dem mehrdimensionalen Datensatz angepaßter Richtungsvektor mit einer vorbestimmbaren Orientierung bzw. einer vorbest immbaren Länge, der den vorbestimmbaren Bereich überspannt. Wird beispielsweise eine zweidimensionale Schnittebene durch die Lötstelle eines Halbleiterelements auf einer Leiterplatte gelegt und möche der Betrachter einen auf der zweidimensionalen Schnittebene erkennbaren Lötfehler in einer beispielsweise auf der Schnittebene nicht senkrecht stehenden Ebene betrachten, so kann er mittels des Zeigers die auf der Schnittebene erkennbare Stelle markieren und durch eine Manipulation der Richtung, der Länge und der Orientierung des Zeigers diesen quasi "intuitiv" derart in der zweidimensionalen Schnittebene anordnen, daß die durch den Zeiger festgelegten Zeigerebenen genau jenen Schnitt ergeben, den der Betrachter ansehen möchte.

Mit Vorteil wird der Zeiger dabei zuerst auf eine erste zweidimensionale Schnittebene durch die Bestimmung der Orientierung und der Länge des Zeigers festgelegt und mittels einer auf einer zweiten Schnittebene senkrecht stehenden Projektion auf diese zweite Schnittebene abgebildet und kann dort ebenfalls anhand einer Manipulation der Richtung, der Orientierung und der Länge verändert werden. Vorteilhafterweise wird der Zeiger dabei in zwei, drei oder mehreren Schnittebenen gleichzeitig dargestellt, so daß eine Veränderung des Zeigers in einer der gewählten Schnittebenen auch auf den anderen Schnitebenen dargestellt wird.

Es lassen sich beliebig viele Schnittebenen durch den mehrdimensionalen Datensatz legen, wobei der Zeiger in sämtlichen dieser Schnittebenen als Projektion dargestellt wird. Um jedoch gegenüber den herkömmlichen Verfahren eine Beschleunigung des gewünschten Schnitts durch den interessierenden Bereich (Blickwinkel) zu erreichen, reicht es in der Praxis als bevorzugte Ausführungsform der Erfindung aus, den Zeiger lediglich in einer oder zwei Schnittebenen darzustellen und dort zu manipulieren.

Durch die Manipulation des Zeigers werden gleichzeitig auch die durch den Zeiger definierten Zeigerebenen manipuliert. Beispielsweise wird die mindestens eine Zeigerebene durch den Anfangspunkt oder den Endpunkt des Zeigers festgelegt, wobei der Zeiger vorteilhafterweise orthogonal auf der Zeigerebene steht. Nach einer besonderen Ausführungsform der Erfindung wird eine erste Zeigerebene durch den Anfangspunkt und eine zweite zur ersten Zeigerebene parallele Zeigerebene durch den Endpunkt des Zeigers festgelegt, so daß der Zeiger orthogonal auf beiden Zeigerebenen steht.

Durch eine Längenmanipulation des Zeigers wird dabei der Abstand der Zeigerebenen verändert. Durch eine Manipulation der Orientierung des Zeigers werden die entsprechenden Zeigerebenen im mehrdimensionalen Raum um den Mittelpunkt oder Drehpunkt des Zeigers gedreht. Durch eine Manipulation der Richtung des Zeigers wird die "Blickrichtung" im mehrdimensionalen Raum verändert, d.h. die erste Zeigerebene wird zur zweiten Zeigerebene und umgekehrt.

Nach einer weiteren vorteilhaften Ausführungsform der Erfindung ist die Richtung des Zeigers vom Anfangspunkt zum Endpunkt des Zeigers gerichtet. Dieser auch als "Navigationspfeil" dienende Zeiger kann eine unendliche Anzahl von Zeigerebenen definieren, die sich zwischen dem Anfangspunkt und dem Endpunkt befinden und jeweils orthogonal auf dem Zeiger stehen. Die Darstellung des vorbestimmbaren Bereichs bzw. der interessierenden Stelle innerhalb des mehrdimensionalen Bilddatensatzes erfolgt dann mittels der (zweidimensionalen) Darstellung eines Schnitts, der durch Zeigerebenen definiert wird, die sukzessive vom Anfangspunkt zum Endpunkt des Zeigers verschoben werden.

Nach einer weiteren vorteilhaften Ausgestaltung der vorliegenden Erfindung wird der mehrdimensionale Datensatz an der Zeigerebene bzw. den Zeigerebenen durch Ausblendung entsprechender mehrdimensionaler Bilddatenbereiche abgeschnitten, so daß nur solche Bilddaten mehrdimensional dargestellt werden, die auf der einen oder anderen Seite der entsprechenden Zeigerebene oder zwischen den Zeigerebenen liegen. Werden beispielsweise zwei durch den Zeiger definierte Zeigerebenen verwendet, kann der beispielsweise dreidimensionale Bildatensatz auf denjenigen Seiten der Zeigerebenen "abgeschnitten" werden, die auf der dem Zeiger gegenüber liegenden Seite der jeweiligen Zeigerebene liegen. Der Betrachter kann dann den reduzierten Bilddatensatz von beiden Seiten der Zeigerebenen betrachten und s o - je nach Länge des Zeigers - unterschiedlich "dicke" Datensatzbereiche bzw. Bereiche des Objekts betrachten.

Die erfindungsgemäße Vorrichtung zur Darstellung eines vorbestimmbaren Bereichs in mehrdimensionalen Datensätzen verfügt über Berechnungsmittel zur Generierung mindestens eines insbesondere zweidimensionalen Schnitts durch den vorbestimmbaren Bereich und entsprechende Anzeigemittel zur Anzeige des Schnitts, wobei der Schnitt durch mindestens eine Zeigerebene definiert wird, die in dem mehrdimensionalen Datensatz liegt. Wie bereits beschrieben, wird diese mindestens eine Zeigerebene mittels eines Zeigers festgelegt, der durch Manipulationsmittel in dem mehrdimensionalen Datensatz bzw. auf inbesondere zweidimensionalen Schnittebenen durch den mehrdimensionalen Datensatz manipulierbar und festlegbar ist.

Vorteilhafterweise ist der Zeiger selbst auf einer Anzeige des mehrdimensionalen Datensatzes bzw. der zweidimensionalen Schnittebenen synchron anzeigbar und mittels der Manipulationsmittel in Richtung bzw. Länge bzw. Orientierung veränderbar. Während beispielsweise eine zweidimensionale Schnittebene durch den dreidimensionalen Bilddatensatz eines Objekts dargestellt wird, kann der Zeiger an einer interessierenden Stelle des zweidimensionalen Schnitts angelegt und derart manipuliert werden, daß diese Stelle in der vom Betrachter gewünschten Richtung, Orientierung und an einer bestimmten Schnittstelle betrachtet werden kann, die durch die Zeigerebene beispielsweise am Fußpunkt des Zeigers oder am Kopf des Zeigers definiert wird.

Dabei ist es vorteilhaft, daß der Zeiger bei einer Manipulation auf einer ersten Schnittebene gleichzeitig auf einer zweiten Schnittebene darstellbar ist und die entsprechende Manipulation auch dort synchron dargestellt wird. Vorteilhafterweise kann der Zeiger auch auf der zweiten Schnittebene oder weiteren Schnittebenen manipuliert werden.

Nach einer weiteren vorteilhaften Ausführungsform der Erfindung wird der Zeiger auch in der mehrdimensionalen Darstellung des Datensatzes abgebildet und kann dort manipuliert werden. Wird beispielsweise ein dreidimensionales Objekt dreidimensional dargestellt, kann auch der Zeiger auf dieser dreidimensionalen Darstellung durch Überlagerung eines in der Technik bekannten Vektordatensatzes des Zeigers (open GL) mit dem dreidimensionalen Datensatz, (zweidimensionale Darstellung mit dreidimensionaler Information) dargestellt und manipuliert werden.

Eine bevorzugte Ausführungsform der vorliegenden Erfindung wird anhand der Zeichnungen näher erläutert. Dabei zeigen:
Fig. 1 den mittels Ultraschallaufnahmen generierten (zweidimensional dargestellten) dreidimensionalen Datensatz eines menschlichen Organs (beispielsweise ein Herz);
Fig. 2 die Darstellung des Datensatzes nach Fig. 1 mittels zweier Schnitte S1 und S2;
Fig. 3 die schematische Darstellung des erfindungsgemäßen Vektors bzw. Zeigers mit Zeigerebenen;
Fig. 4a/4b die Anordnung des Vektors bzw. Zeigers mit Vektorebenen (Zeigerebenen) in den Schnitten S1 und S2 nach Fig. 2 ;
Fig. 5 die Aufsicht auf eine erste Zeigerebene;
Fig. 6 die Aufsicht auf eine zweite Zeigerebene, und
Fig. 7 die (zweidimensional dargestellte) dreidimensionale Darstellung des Bilddatensatzes (Volumen) mit Zeiger und Zeigerebenen.

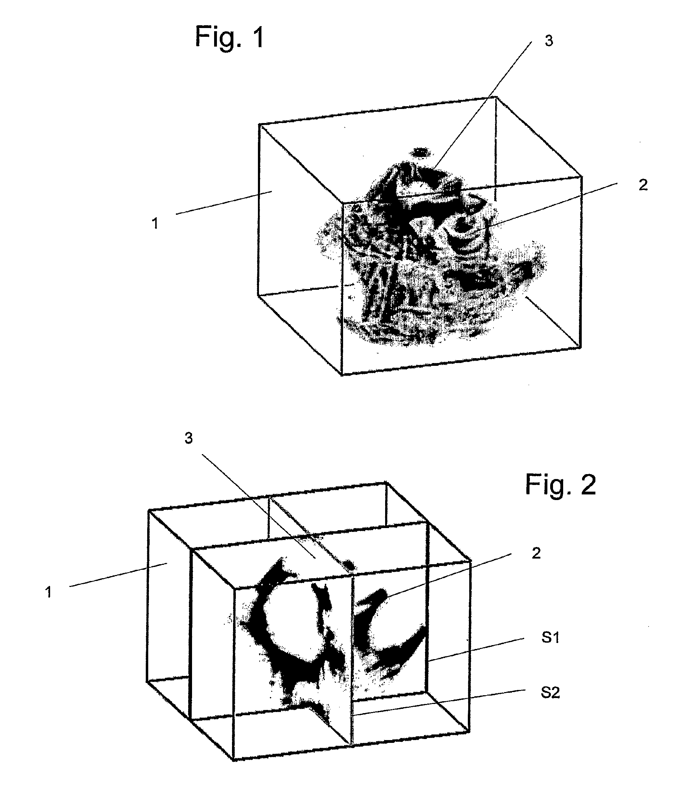

Fig. 1 zeigt die dreidimensionale Darstellung eines Objekts, wie beispielsweise das Herz eines Menschen, wobei der in Fig. 1 dargestellte Datensatz 2 mittels beispielsweise einer Vielzahl von zweidimensionalen Ultraschallaufnahmen generiert wurde, die mittels herkömmlicher Rekonstruktionstechniken einen dreidimensionalen Bilddatensatz (Voxel-Datensatz) ergeben. Dieses Volumen 1 wird durch entsprechende Grauwertinformationen der einzelnen Bilddatenwürfel (Voxel) erzeugt, die in Fig. 1 als Grauwertinformation dargestellt sind. Fig. 1 zeigt darüber hinaus einen vorbestimmbaren Bereich 3, der genauer untersucht werden soll.

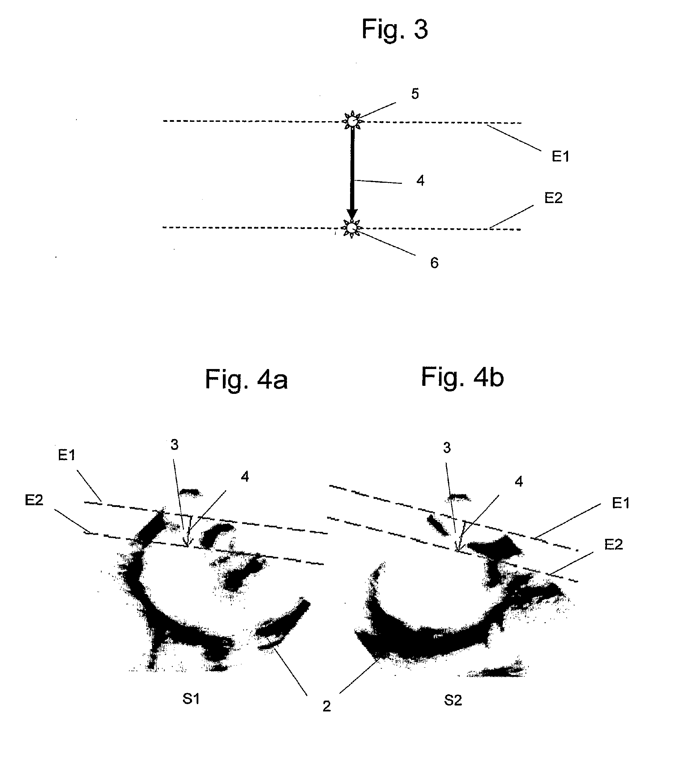

Fig. 2 zeigt zwei Schnitte S1 und S2 durch den dreidimensionalen Bilddatensatz 2 nach Fig. 1, die nicht nowendigerweise senkrecht aufeinander stehen müssen. Fig. 3 zeigt schematisch einen zweidimensionalen Vektor bzw. Zeiger 4, der eine bestimmte Länge, eine Orientierung und eine Richtung aufweist, die von einem Anfangspunkt 5 zu einem Endpunkt 6 zeigt. Zwei Vektorebenen (Zeigerebenen) E1 und E2 stehen orthogonal auf dem Zeiger 4, wobei eine erste Zeigerebene E1 den Zeiger 4 am Anfangspunkt 5 berührt, während eine zweite Zeigerebene E2 den Zeiger 4 am Endpunkt 6 berührt.

Fig. 4a und 4b zeigen die Schnitte S1 (Fig. 4a) und S2 (Fig. 4b) nach Fig. 2. Der vorbestimmbare Bereich 3 ist am oberen Ende der Schnitte S1 und S2 gezeigt und es wird angenommen, daß der Betrachter diesen vorbestimmbaren Bereich näher untersuchen bzw. betrachten möchte. Dabei soll es ein Anliegen des Betrachters sein, den vorbestimmbaren Bereich 3 in einer bestimmten Richtung zu betrachten, so daß nun der in Fig. 3 schematisch gezeigte Zeiger 4 im ersten Schnitt S1 entsprechend dem vorbestimmbaren Bereich 3 angeordnet wird. Durch eine Veränderung der Länge und der Orientierung des Zeigers 4 werden automatisch auch die erste und zweite Zeigerebene E1 und E2 verändert. In Fig. 4a verlaufen diese Zeigerebenen orthogonal zum Zeiger 4 und senkrecht zum ersten Schnitt S1.

Der in Fig. 4a dargestellte zweidimensionale Vektor bzw. Zeiger 4 wird mittels einer senkrechten Projektion auf den zweiten Schnitt S2 abgebildet. Durch die Abbildung des Zeigers 4 auf die zweite Schnittebene S2 kann die Lage des Zeigers 4 im dreidimensionalen Raum beliebig verändert werden, so daß mittels einer Veränderung des Anfangspunkts 5 bzw. Endpunkts 6 des Zeigers 4 die Zeigerebenen E1 bzw. E2 automatisch festgelegt werden. Die in Fig. 4b dargestellten Linien stellen die projezierten Schnittlinien des zweiten Schnitts S2 mit den Zeigerebenen E1 und E2 dar. Natürlich ist es auch denkbar, den Zeiger 4 zunächst im zweiten Schnitt S2 festzulegen und dann auf den Schnitt S1 zu projezieren. Die Schnitte S1 und S2 müssen dabei nicht notwendigerweise senkrecht aufeinander stehen.

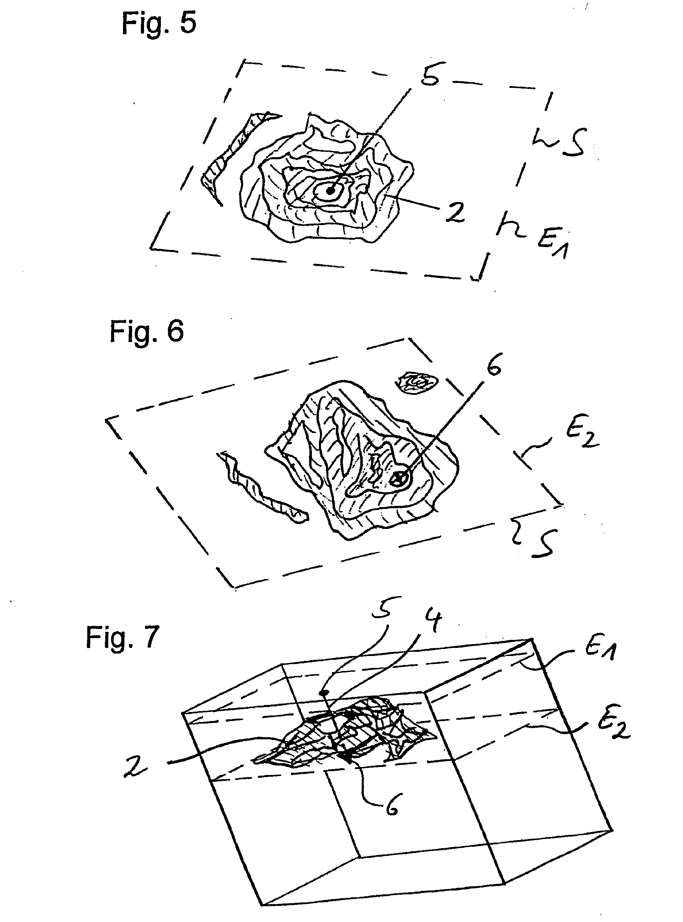

Die Fig. 5, 6 und 7 zeigen den interessierenden Schnitt S je nach Wahl des Betrachters. Möchte der Betrachter beispielsweise den vorbestimmbaren Bereich 3 in Richtung des Zeigers 4 betrachten, so wird er als Schnitt S die Zeigerebene E1 wählen und den interessierenden bzw. vorbestimmbaren Bereich längs des Zeigers 4 betrachten können. In Fig. 5 ist der Anfangspunkt 5 dargestellt, der die Zeigerebene E1 und quasi die "Oberfläche" des Schnitts S berührt.

Möchte der Betrachter den vorbestimmbaren Bereich 3 entgegen der Richtung des Zeigers 4 betrachten, so wird er als Schnitt S die zweite Zeigerebene E2 verwenden, die in Fig. 6 dargestellt ist. Fig. 6 zeigt hier die Zeigerebene E2, d.h. einen in richtiger Orientierung und Lage gesetzten Schnitt durch den dreidimensionalen Datensatz 2.

Fig. 7 zeigt die Gesamtdarstellung des dreidimensionalen Volumens 1 mit dem dreidimensionalen Datensatz 2, der nur zwischen den Zeigerebenen E1 und E2 dargestellt wird. Die Zeigerebenen E1 und E2 sind dabei in Fig. 7 parallel zu den Flächen des Volumens 1 dargestellt, jedoch können die Zeigerebenen in jeder anderen beliebigen Orientierung innerhalb des Volumens 1 liegen. Die Zeigerebenen E1 und E2 werden dabei jeweils durch den Anfangspunkt 5 und Endpunkt 6 des Zeigers 4 festgelegt und definieren die entsprechenden Schnittebenen durch den dreidimensionalen Datensatz 2. Dieser kann entsprechend von jeder Seite der Zeigerebene E1 oder E2 betrachtet werden.

Nach einer besonderen Ausführungsform der vorliegenden Erfindung kann der Zeiger 4 auch unmittelbar in dem dreidimensionalen Datensatz 2, wie in Fig. 7 dargestellt, manipuliert werden. Beispielsweise kann der Anfangspunkt 5 und/oder der Endpunkt 6 des Zeigers am Bildschirm eines Datenverarbeitungsgeräts durch "Ziehen mit der Maus" in Lage, Länge, Richtung und/oder Orientierung verändert werden, bis der Betrachter des dreidimensionalen Datensatzes 2 die richtige Einstellung erhält. Im Anschluß daran oder sogar parallel hierzu kann der Betrachter auf einem weiteren Bildschirm oder an einer anderen Stelle desselben Bildschirms den Schnitt S betrachten, der durch die erste Zeigerebene E1 und/oder die zweite Zeigerebene E2 oder durch eine weitere Zeigerebene definiert wird, die beispielsweise durch die Mitte des Zeigers 4 oder an einer anderen beliebigen Stelle des Zeigers gelegt ist.

Ein solches Verfahren bzw. eine solche Vorrichtung eignet sich insbesondere zur schnellen Darstellung eines interessierenden Bereichs eines (kranken) Organs eines Menschen, das durch eine Röntgenaufnahme oder eine Ultraschallaufnahme dreidimensional dargestellt wird. Durch intuitives Bewegen des Zeigers kann der Arzt unmittelbar Zeigerebenen definieren, die ihm die gewünschte Ansicht des Organs am vorbestimmbaren Bereich 3 ermöglichen.

## Patentansprüche

1. Verfahren zur Darstellung eines vorbestimmbaren Bereichs (3) in mehrdimensionalen Datensätzen (2), wobei die drei- oder vierdimensionalen Datensätze (2) aus Bilddaten eines zu untersuchenden Objekts bestehen, wobei die Bilddaten mittels einer oder mehreren Aufnahmen des Objekts erzeugt werden, und wobei mindestens ein zweidimensionaler Schnitt (S) durch den vorbestimmbaren Bereich (3) gelegt und angezeigt wird,
wobei der Schnitt (S) durch mindestens eine Vektorebene (E1, E2) definiert wird, die in dem mehrdimensionalen Datensatz(2) liegt,
die mindestens eine Vektorebene (E1, E2) mittels eines Vektors (4) festgelegt wird, und
der Vektor (4) auf zweidimensionalen Schnittebenen (S1, S2) durch den mehrdimensionalen Datensatz (2) festgelegt wird,
und wobei der Vektor (4) ein dem mehrdimensionalen Datensatz (2) angepasster Richtungsvektor mit einer vorbestimmbaren Orientierung und einer vorbestimmbaren Länge ist, der den vorbestimmbaren Bereich (3) überspannt, **dadurch gekennzeichnet,**
**dass** der Vektor (4) auf einer ersten zweidimensionalen Schnittebene (S1) durch die Bestimmung der Orientierung und der Länge festgelegt wird und dass der derart festgelegte Vektor auf eine zweite Schnittebene (S2) abgebildet und auf der zweiten Schnittebene korrigiert wird.

2. Verfahren nach Anspruch 1,
**dadurch gekennzeichnet,**
**dass** die zweite Schnittebene (S2) nicht zur ersten Schnittebene (S1) parallel ist.

3. Verfahren nach einem der vorhergehenden Ansprüche,
**dadurch gekennzeichnet,**
**dass** die mindestens eine Vektorebene (E1, E2) durch den Anfangspunkt (5) und/oder Endpunkt (6) des Vektors (4) festgelegt wird und der Vektor (4) orthogonal auf der Vektorebene (E1, E2) steht.

4. Verfahren nach Anspruch 3,
**dadurch gekennzeichnet,**
**dass** eine erste Vektorebene (E1) durch den Anfangspunkt (5) und eine zweite zur ersten Vektorebene (E1) parallele Vektorebene (E2) durch den Endpunkt (6) des Vektors (4) festgelegt werden und dass der Vektor (4) orthogonal auf beiden Vektorebenen (E1, E2) steht.

5. Verfahren nach einem der vorhergehenden Ansprüche,
**dadurch gekennzeichnet,**
**dass** die Richtung des Vektors (4) vom Anfangspunkt (5) zum Endpunkt (6) gerichtet ist,
**dass** der Schnitt (S) durch eine auf dem Vektor (4) senkrecht stehende Vektorebene (E1, E2) definiert wird, und
**dass** die Darstellung des vorbestimmbaren Bereichs (3) mittels des Schnitts (S) erfolgt, indem die Vektorebene (E1, E2) sukzessive vom Anfangspunkt (5) zum Endpunkt (6) verschoben wird.

6. Verfahren nach einem der vorhergehenden Ansprüche,
**dadurch gekennzeichnet,**
**dass** der mehrdimensionale Datensatz (2) an den Vektorebenen (E1, E2) durch Ausblendung entsprechender Bilddaten abgeschnitten wird und nur solche Bilddaten mehrdimensional dargestellt werden, die zwischen den Vektorebenen (E1, E2) liegen.

7. Vorrichtung zur Darstellung eines vorbestimmbaren Bereichs (3) in mehrdimensionalen Datensätzen (2), wobei die Datensätze (2) aus Bilddaten eines zu untersuchenden Objekts bestehen und wobei die Bilddaten mittels einer oder mehreren Aufnahmen des Objekts erzeugt werden, mit
Berechnungsmitteln zur Generierung mindestens eines zweidimensionalen Schnitts (S) durch den vorbestimmbaren Bereich (3) und
Anzeigemitteln zur Anzeige des Schnitts (S),
wobei der Schnitt (S) durch mindestens eine Vektorebene (E1, E2) definiert wird, die in dem mehrdimensionalen Datensatz(2) liegt,
die mindestens eine Vektorebene (E1, E2) mittels eines Vektors (4) festgelegt wird, und
der Vektor (4) mittels Manipulationsmitteln in dem mehrdimensionalen Datensatz (2) oder auf zweidimensionalen Schnittebenen (S1, S2) durch den mehrdimensionalen Datensatz (2) manipulierbar und festlegbar ist,
**dadurch gekennzeichnet,**
**dass** der Vektor (4) auf einer Anzeige des mehrdimensionalen Datensatzes (2) oder der zweidimensionalen Schnittebenen (S1, S2) synchron anzeigbar ist und mittels der Manipulationsmittel die Richtung und die Länge und die Orientierung des Vektors (4) veränderbar ist.

8. Vorrichtung nach einem der Ansprüche 7,
**dadurch gekennzeichnet,**
**dass** bei der Manipulation des Vektors (4) auf einer ersten Schnittebene (S1) die Abbildung des Vektors (4) auf einer zweiten Schnittebene (S2) darstellbar ist.

9. Vorrichtung nach Anspruch 8,
**dadurch gekennzeichnet,**
**dass** die Abbildung des Vektors (4) auf der zweiten Schnittebene (S2) manipulierbar ist.

10. Vorrichtung nach einem der Ansprüche 7-9,
**dadurch gekennzeichnet,**
**dass** der Vektor (4) im mehrdimensionalen Datensatz mehrdimensional manipulierbar und abbildbar ist.

## Claims

1. A method of representing a predeterminable region (3) in multidimensional data sets (2), the three- or four-dimensional data sets (2) consisting of image data of an object to be examined, said image data being generated by means of one or more images of the object, and at least one two-dimensional section (S) being made through the predeterminable region (3) and being displayed,
the section (S) being defined by at least one vector plane (E1, E2) lying in the multidimensional data set (2),
the at least one vector plane (E1, E2) being defined by a vector (4)
and
the vector (4) being defined on two-dimensional sectional planes (S1, S2) by the multidimensional data set (2),
and
the vector (4) being a direction vector which is adapted to the multidimensional data set (2) and has a specifiable orientation and a specifiable length spanning the predeterminable region (3),
**characterised in that**
the vector (4) is defined on a first two-dimensional sectional plane (S1) by specifying the orientation and length and that the vector defined in this way is copied onto a second sectional plane (S2) and corrected thereon.

2. The method according to claim 1,
**characterised in that**
the second sectional plane (S2) is not parallel to the first sectional plane (S1).

3. The method according to either one of the preceding claims,
**characterised in that**
the at least one vector plane (E1, E2) is defined by the start point (5) and/or end point (6) of the vector (4), and the vector (4) is positioned orthogonally on the vector plane (E1, E2).

4. The method according to claim 3,
**characterised in that**
a first vector plane (E1) is defined by the start point (5) and a second vector plane (E2), which is parallel to the first vector plane (E1), is defined by the end point (6) of the vector (4), and that the vector (4) is positioned orthogonally on both vector planes (E1, E2).

5. The method according to any one of the preceding claims,
**characterised in that**
the direction of the vector (4) is oriented from the start point (5) to the end point (6),
that the section (S) is defined by a vector plane (E1, E2) positioned on the vector (4) at right angles thereto and
that representation of the predeterminable region (3) is effected via the section (S) by displacing the vector plane (E1, E2) successively from the start point (5) to the end point (6).

6. The method according to any one of the preceding claims,
**characterised in that**
the multidimensional data set (2) is cut off at the vector planes (E1, E2) by blanking out of corresponding image data and only those image data lying between the vector planes (E1, E2) are shown multidimensionally.

7. An apparatus for representing a predeterminable region (3) in multidimensional data sets (2), the data sets (2) consisting of image data of an object to be examined and the image data being generated by means of one or more images of the object, comprising
computing means for generating at least one two-dimensional section (S) through the predeterminable region (3) and
display means for displaying the section (S),
the section (S) being defined by at least one vector plane (E1, E2) lying in the multidimensional data set (2),
the at least one vector plane (E1, E2) being defined by a vector (4)
and
the vector (4) being manipulable and definable by way of manipulation means in the multidimensional data set (2) or on two-dimensional sectional planes (S1, S2) by the multidimensional data set (2),
**characterised in that**
the vector (4) can be displayed synchronously on a display of the multidimensional data set (2) or of the two-dimensional sectional planes (S1, S2) and the direction, length and orientation of the vector (4) can be altered by way of the manipulation means.

8. The apparatus according to claim 7,
**characterised in that**
during manipulation of the vector (4) on a first sectional plane (S1), the image of the vector (4) can be shown on a second sectional plane (S2).

9. The apparatus according to claim 8,
**characterised in that**
the image of the vector (4) on the second sectional plane (S2) is manipulable.

10. The apparatus according to any one of the claims 7 - 9,
**characterised in that**
the vector (4) can be manipulated and copied multidimensionally in the multidimensional data set.

## Revendications

1. Procédé pour la représentation d'une zone prédéterminable (3) dans des ensembles de données multidimensionnelles (2), dans lequel les ensembles de données tridimensionnelles ou quadridimensionnelles (2) sont constitués des données images d'un objet à analyser, dans lequel les données images sont produites au moyen d'un ou plusieurs enregistrements de l'objet, et dans lequel on réalise au moins une coupe bidimensionnelle (S) à travers la zone prédéterminable (3) et on l'affiche,
dans lequel la coupe (S) est définie par au moins un plan vectoriel (E1, E2) qui se trouve dans l'ensemble de données multidimensionnelles (2),
ledit au moins un plan vectoriel (E1, E2) est défini au moyen d'un vecteur (4), et le vecteur (4) est défini sur des plans de coupe bidimensionnels (S1, S2) par les ensembles de données multidimensionnelles (2),
et dans lequel le vecteur (4) est un vecteur directionnel adapté à l'ensemble de données multidimensionnelles (2) avec une orientation prédéterminable et une longueur prédéterminable, qui couvre la zone prédéterminable (3),
**caractérisé en ce que** le vecteur (4) est défini sur un premier plan de coupe bi-dimensionnel (S1) par la détermination de l'orientation et de la longueur, et **en ce que** le vecteur ainsi défini est imagé sur un second plan de coupe (S2) et est corrigé sur le second plan de coupe.

2. Procédé selon la revendication 1,
**caractérisé en ce que** le second plan de coupe (S2) n'est pas parallèle au premier plan de coupe (S1).

3. Procédé selon l'une des revendications précédentes,
**caractérisé en ce que** ledit au moins un plan vectoriel (E1, E2) est défini par le point de départ (5) et/ou le point final (6) du vecteur (4), et le vecteur (4) est dressé perpendiculairement sur le plan vectoriel (E1, E2).

4. Procédé selon la revendication 3,
**caractérisé en ce qu'**un premier plan vectoriel (E1) est défini par le point de départ (5) est un second plan vectoriel (E2) parallèle au premier plan vectoriel (E1) est défini par le point final (6) du vecteur (4), et **en ce que** le vecteur (4) est dressé perpendiculairement sur les deux plans vectoriels (E1, E2).

5. Procédé selon l'une des revendications précédentes,
**caractérisé en ce que**
la direction du vecteur (A) est dirigée depuis le point de départ (5) jusqu'au point final (6),
**en ce que** la coupe (S) est définie par un plan vectoriel (E1, E2) perpendiculaire au vecteur (4), et
**en ce que** la représentation de la zone prédéterminable (3) a lieu au moyen de la coupe (S), en déplaçant le plan vectoriel (E, E2) successivement depuis le point de départ (5) jusqu'au point final (6).

6. Procédé selon l'une des revendications précédentes,
**caractérisé en ce que** l'ensemble de données multidimensionnelles (2) est découpé sur les plans vectoriels (E1, E2) en masquant des ensembles de données correspondants, et l'on représente de manière multidimensionnelle uniquement celles des données image qui sont situées entre les plans vectoriels (E1, E2).

7. Dispositif pour représenter une zone prédéterminable (3) dans des ensembles de données multidimensionnelles (2), dans lequel les ensembles de données (2) sont constitués par des données images d'un objet à analyser et dans lequel les données images sont engendrées au moyen d'un ou plusieurs enregistrements de l'objet, comprenant
des moyens de calcul pour générer au moins une coupe bidimensionnelle (S) à travers la zone prédéterminable (3) et
des moyens d'affichage pour afficher la coupe (S),
dans lequel la coupe (S) est définie par au moins un plan vectoriel (E1, E2) qui est situé dans l'ensemble de données multidimensionnelles (2),
ledit au moins un plan vectoriel (E1, E2) est défini au moyen d'un vecteur (4), et le vecteur (4) est susceptible d'être manipulé et fixé au moyen de moyens de manipulation dans l'ensemble de données multidimensionnelles (2) ou sur des plans de coupe bidimensionnels (S1, S2) à travers l'ensemble de données multidimensionnelles (2),
**caractérisé en ce que** le vecteur (4) est susceptible d'être affiché de manière synchrone sur un affichage de l'ensemble de données multidimensionnelles (2) ou des plans de coupe bidimensionnels (S1, S2) et la direction et la longueur ainsi que l'orientation du vecteur (4) sont modifiables au moyen des moyens de manipulation.

8. Dispositif selon la revendication 7,
**caractérisé en ce que** lors de la manipulation du vecteur (4) sur un premier plan de coupe (S2), l'image du vecteur (4) est susceptible d'être représentée sur un second plan de coupe (S2).

9. Dispositif selon la revendication 8,
**caractérisé en ce que** l'image du vecteur (4) sur le second plan de coupe (S2) est manipulable.

10. Dispositif selon l'une des revendications 7 à 9,
**caractérisé en ce que** le vecteur (4) est susceptible d'être manipulé et imagé dans l'ensemble de données multidimensionnelles.
